(19) Europäisches Patentamt
European Patent Office
Office européen des brevets

(11) **EP 3 364 007 A1**

(12) **EUROPEAN PATENT APPLICATION**

(43) Date of publication:
**22.08.2018 Bulletin 2018/34**

(51) Int Cl.:
*F01N 3/20* (2006.01)     *F01N 13/00* (2010.01)

(21) Application number: **18156646.4**

(22) Date of filing: **14.02.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **16.02.2017   JP 2017026646**

(71) Applicant: **Toyota Jidosha Kabushiki Kaisha
Toyota-shi, Aichi-ken, 471-8571 (JP)**

(72) Inventors:
• **TAKADA, Keishi
Aichi-Ken, Aichi 471-8571 (JP)**

• **SATO, Masaaki
Aichi-Ken, Aichi 471-8571 (JP)**
• **MIKAMI, Akira
Aichi-Ken, Aichi 471-8571 (JP)**
• **ITO, Katsuhiro
Aichi-Ken, Aichi 471-8571 (JP)**
• **ONO, Ryohei
Aichi-Ken, Aichi 471-8571 (JP)**
• **MORALES TERAOKA, Edgar Yoshio
Aichi-Ken, Aichi 471-8571 (JP)**

(74) Representative: **D Young & Co LLP
120 Holborn
London EC1N 2DY (GB)**

(54) **EXHAUST GAS PURIFICATION APPARATUS FOR AN INTERNAL COMBUSTION ENGINE**

(57)     In order to supply a reducing agent to two NOx catalysts arranged in series in an appropriate manner, normal control in which an additive agent of an amount according to an amount of NOx flowing into an upstream side NOx catalyst is added from an upstream side of the upstream side NOx catalyst, and decrease control in which when an amount of ammonia adsorbed to a downstream side NOx catalyst exceeds a predetermined upper limit amount in cases where the two NOx catalysts have been activated, an amount of additive agent to be added from a first addition device is made smaller than the amount of additive agent to be added at the time of the normal control, are carried out.

Fig. 1

EP 3 364 007 A1

**Description**

BACKGROUND OF THE INVENTION

Field of the Invention

The present invention relates to an exhaust gas purification apparatus for an internal combustion engine.

Description of the Related Art

There has been known an NOx selective catalytic reduction catalyst (hereinafter, also referred to simply as an "NOx catalyst") which purifies (removes or reduces) NOx contained in an exhaust gas of an internal combustion engine by using ammonia as a reducing agent. At the upstream side of this NOx catalyst, there is arranged an addition valve or the like which serves to add ammonia or a precursor of ammonia (hereinafter, ammonia or a precursor thereof being also referred to as an "additive agent") into the exhaust gas. As the precursor of ammonia, there can be mentioned urea, for example.
Here, there is known a construction in which two NOx catalysts are arranged in series in an exhaust passage, and an additive agent is supplied to each of the NOx catalysts. Here, note that in the following, one of the NOx catalysts arranged at the upstream side is also referred to as a first NOx catalyst, and the other NOx catalyst arranged at the downstream side is also referred to as a second NOx catalyst. In this construction, there is known a technique in which in cases where the temperature of the NOx catalyst at the upstream side is equal to or less than a predetermined upper limit temperature, the additive agent is supplied to the NOx catalyst at the upstream side, whereas in cases where the temperature of the NOx catalyst at the upstream side exceeds the predetermined upper limit temperature, the additive agent is supplied to the NOx catalyst at the downstream side (for example, refer to patent literature 1).

CITATION LIST

PATENT LITERATURE

Patent Literature 1: Japanese patent application laid-open publication No. 2011-202620

SUMMARY OF THE INVENTION

TECHNICAL PROBLEM

Here, when the additive agent is supplied to the first NOx catalyst in cases where both the first NOx catalyst and the second NOx catalyst are in an activated state, ammonia will be adsorbed to the first NOx catalyst. In this state, when the temperature of the first NOx catalyst goes up suddenly, the amount of ammonia able to be adsorbed to the first NOx catalyst will decrease suddenly, so the ammonia adsorbed to the first NOx catalyst desorbs from the first NOx catalyst. The ammonia thus desorbed flows into the second NOx catalyst, and is adsorbed to the second NOx catalyst. As a result, the amount of adsorption of ammonia in the second NOx catalyst can become excessive. In that case, the ammonia, which can not be fully adsorbed to the second NOx catalyst, may flow out from the second NOx catalyst.
In addition, at this time, the first NOx catalyst has been activated, so when the additive agent is added to the first NOx catalyst, most of NOx contained in the exhaust gas will be reduced in the first NOx catalyst. Accordingly, because a small amount of NOx, which has not been able to be fully reduced in the first NOx catalyst, flows into the second NOx catalyst, an amount of consumption of the ammonia adsorbed to the second NOx catalyst is small. That is, a state where the amount of adsorption of ammonia in the second NOx catalyst is excessive will continue long. For this reason, a state where ammonia easily desorbs from the second NOx catalyst will continue. Moreover, when the additive agent is added to the first NOx catalyst in such a state, the additive agent will be added in spite of the fact that NOx can be reduced or removed in the second NOx catalyst to a sufficient extent, and hence, the additive agent will be added uselessly.
Accordingly, the present invention has for its object to supply a reducing agent to two NOx catalysts arranged in series in an appropriate manner.

SOLUTION TO PROBLEM

In order to solve the above-mentioned problems, an exhaust gas purification apparatus for an internal combustion engine according to the present invention comprises: a first NOx catalyst that is arranged in an exhaust passage of the internal combustion engine and is an NOx selective catalytic reduction catalyst selectively to reduce NOx in an exhaust gas by using ammonia as a reducing agent; a second NOx catalyst that is arranged in said exhaust passage at a location downstream of said first NOx catalyst and is an NOx selective catalytic reduction catalyst selectively to reduce NOx in the exhaust gas by using ammonia as a reducing agent; a first addition device that is arranged in said exhaust passage at the upstream side of said first NOx catalyst and configured to add an additive agent, which is ammonia or a precursor of ammonia, into the exhaust gas; a second addition device that is arranged in said exhaust passage at the downstream side of said first NOx catalyst and at the upstream side of said second NOx catalyst, and configured to add said additive agent into the exhaust gas; and a control device configured to carry out normal control in which an amount of the additive agent corresponding to an amount of NOx flowing into said first NOx catalyst is added from said first addition device, wherein when an amount of ammonia adsorbed to said second NOx catalyst exceeds a predetermined upper limit amount in the case where said first NOx catalyst and said second NOx catalyst have been activated, said control device carries out decrease control in which an amount of said additive agent to be added from said first addition device is made smaller than the amount of said additive agent to be added at the time of said normal control.

In the normal control, the additive agent is added from the first addition device according to the amount of NOx flowing into the first NOx catalyst, so in the first NOx catalyst, NOx can be reduced in an appropriate manner. However, when the temperature of the first NOx catalyst goes up suddenly at the time of the normal control, the ammonia adsorbed to the first NOx catalyst will desorb and flow out from the first NOx catalyst. Then, this ammonia is adsorbed to the second NOx catalyst. In this manner, when the amount of adsorption of ammonia in the second NOx catalyst increases, it may exceed a predetermined upper limit value. The predetermined upper limit value referred to herein is an amount of adsorption of ammonia in which the amount of ammonia flowing out from the second NOx catalyst becomes an upper limit value of an allowable range. Here, note that in order to suppress the amount of ammonia flowing out from the second NOx catalyst from exceeding the allowable range, the predetermined upper limit value may be given a margin so that the amount of ammonia flowing out from the second NOx catalyst is smaller than an amount of adsorption of ammonia which becomes the upper limit value of the allowable range.

In cases where the amount of adsorption of ammonia in the second NOx catalyst exceeds the predetermined upper limit amount, if the amount of adsorption of ammonia in the second NOx catalyst is not made to decrease, there will be a fear that the amount of ammonia flowing out from the second NOx catalyst may exceed the allowable range. In such a case, the control device carries out the decrease control. In the decrease control, in order to decrease the amount of the additive agent to be added from the first addition device more than at the time of the normal control, an amount of additive agent smaller than the amount of additive agent corresponding to the amount of NOx flowing into the first NOx catalyst is supplied to the first NOx catalyst. That is, in the first NOx catalyst, the amount of additive agent is small with respect to the amount of NOx flowing into there, so the ammonia adsorbed to the first NOx catalyst decreases gradually. Due to such a decrease of ammonia, the ammonia flowing out from the first NOx catalyst decreases, and at the same time, the NOx flowing out from the first NOx catalyst increases. Then, because the ammonia flowing into the second NOx catalyst decreases, the amount of adsorption of ammonia in the second NOx catalyst can be suppressed from increasing, so the outflow of ammonia from the second NOx catalyst can be suppressed. In addition, due to the increase of NOx flowing into the second NOx catalyst, the amount of consumption of ammonia adsorbed to the second NOx catalyst increases, thus making it possible to decrease the amount of adsorption of ammonia in the second NOx catalyst. With this, too, the outflow of ammonia from the second NOx catalyst can be suppressed. Then, by suppressing the outflow of ammonia from the second NOx catalyst, the amount of the additive agent added uselessly is decreased, so that the amount of consumption of the additive agent can be decreased. Thus, the additive agent can be added to the first NOx catalyst and the second NOx catalyst in an appropriate manner.

Here, note that after cold starting of the internal combustion engine, etc., even if the first NOx catalyst has been activated, the second NOx catalyst may not have been activated. In cases where the second NOx catalyst has not been activated, even if NOx flows into the second NOx catalyst, it will flow out from the second NOx catalyst, without being substantially reduced. Accordingly, when the decrease control is carried out at such a time, NOx may flow out from the second NOx catalyst. In such a state, the normal control is carried out without carrying out the decrease control, whereby NOx can be reduced in the first NOx catalyst, thus making it possible to suppress NOx from flowing out from the first NOx catalyst. For this reason, it is also possible to suppress NOx from flowing out from the second NOx catalyst.

In addition, said control device may continue said decrease control until the amount of ammonia adsorbed to said second NOx catalyst is decreased to a predetermined lower limit amount which is a value smaller than said predetermined upper limit amount.

That is, the decrease control can also be carried out only in cases where the amount of adsorption of ammonia in the second NOx catalyst is larger than the predetermined upper limit amount, but in this case, the amount of adsorption of ammonia in the second NOx catalyst becomes the predetermined upper limit value or an amount in the vicinity thereof, so the decrease control may also be carried out immediately. On the other hand, if the amount of adsorption of ammonia in the second NOx catalyst is made to decrease to a sufficient extent by being decreased to the predetermined lower limit amount, it is not necessary to carry out the decrease control frequently. In addition, by decreasing the amount of adsorption of ammonia in the second NOx catalyst to the predetermined lower limit amount, the outflow of ammonia from the second NOx catalyst can be suppressed in a more reliable manner. Here, note that when the predetermined lower limit amount is made too small, the reduction of NOx becomes difficult in the second NOx catalyst. On the other hand, when the predetermined lower limit amount is made too large, the effect of carrying out the decrease control becomes small. Accordingly, the predetermined lower limit amount is decided in consideration of the reduction of NOx and the effect of carrying out the decrease control. The predetermined lower limit amount may be set, for example, so that the NOx reduction rate in the entire system (here, a sum of the NOx reduction rates in the first NOx catalyst and the second NOx catalyst) falls within an allowable range.

In said decrease control, said control device may set the amount of the additive agent to be added from said first addition device to an amount in which the sum of the NOx reduction rates in said first NOx catalyst and said second NOx catalyst becomes equal to or larger than a reduction rate threshold value.

By doing in this manner, the NOx reduction rate in the entire system is maintained equal to or larger than the reduction rate threshold value. Here, when the decrease control is carried out, the amount of adsorption of ammonia in the first NOx catalyst decreases gradually, so that the NOx reduction rate therein can decrease gradually. In addition, when the decrease control is carried out, the amount of adsorption of ammonia in the second NOx catalyst decreases gradually, and at the same time, the amount of NOx flowing into the second NOx catalyst increases, so that the NOx reduction rate therein can decrease gradually. Accordingly, the NOx reduction rate in the entire system can decrease. In that case, during the execution of the decrease control, there is a fear that the NOx reduction rate in the entire system may become smaller than the reduction rate threshold value. The reduction rate threshold value referred to herein is a lower limit value of the allowable range of the NOx reduction rate. Here, note that the reduction rate threshold value can also be given a margin so as to be larger than the lower limit value of the allowable range of the NOx reduction rate, in order to suppress the NOx reduction rate in the entire system from becoming smaller than the lower limit value of the allowable range. In cases where the NOx reduction rate becomes smaller than the reduction rate threshold value, the degree of decreasing the additive agent at the time of the decrease control need only be mitigated. Thus, even in cases where the degree of decreasing the additive agent is mitigated, the amount of additive agent is adjusted so that the amount of additive agent at the time of the decrease control becomes smaller than the amount of additive agent at the time of the normal control. In this manner, the outflow of NOx from the second NOx catalyst can be suppressed by maintaining the NOx reduction rate in the entire system equal to or larger than the reduction rate threshold value.

ADVANTAGEOUS EFFECTS OF INVENTION

According to the present invention, a reducing agent can be supplied to two NOx catalysts arranged in series in an appropriate manner.

BRIEF DESCRIPTION OF DRAWINGS

Fig. 1 is a view showing the schematic construction of an internal combustion engine and its exhaust system according to embodiments of the present invention.
Fig. 2 is a time chart showing the changes over time of various kinds of values.
Fig. 3 is a flow chart showing a flow of control for adding an additive agent according to a first embodiment of the present invention.
Fig. 4 is a time chart showing the changes over time of various kinds of values after starting of the internal combustion engine.
Fig. 5 is a time chart showing the changes over time of various kinds of values.
Fig. 6 is a flow chart showing a flow of control for adding an additive agent according to a second embodiment of the present invention.
Fig. 7 is a time chart showing the changes over time of various kinds of values during execution of decrease control.

DESCRIPTION OF THE EMBODIMENTS

Hereinafter, the best modes for carrying out the present invention will be exemplarily described in detail based on preferred embodiments with reference to the attached drawings. However, the dimensions, materials, shapes, relative arrangements and so on of component parts described in the embodiments are not intended to limit the scope of the present invention to these alone in particular as long as there are no specific statements.

(First Embodiment)

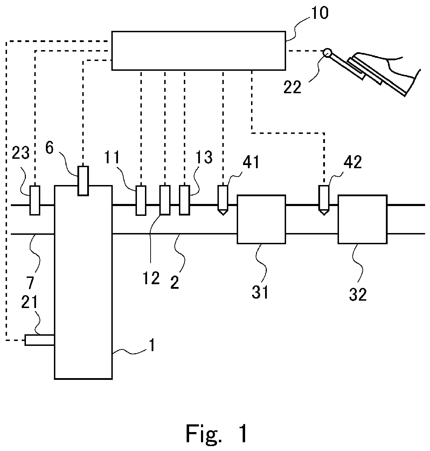

Fig. 1 is a view showing the schematic construction of an internal combustion engine and its exhaust system according to a first embodiment of the present invention. The internal combustion engine 1 is a diesel engine for driving a vehicle. However, the internal combustion engine 1 may be a gasoline engine. An exhaust passage 2 is connected to the internal combustion engine 1. In the exhaust passage 2, two NOx selective catalytic reduction catalysts 31, 32, which serve to selectively reduce NOx in an exhaust gas by using ammonia as a reducing agent, are arranged in series with each other. In the following, the NOx selective catalytic reduction catalyst 31 arranged at the upstream side is referred to as a first NOx catalyst 31, and the NOx selective catalytic reduction catalyst 32 arranged at the downstream side is referred to as a second NOx catalyst 32.

In the exhaust passage 2 at the upstream side of the first NOx catalyst 31, there is arranged a first addition valve 41 which serves to add urea water as a precursor of ammonia into the exhaust gas. The urea water added from the first addition valve 41 is hydrolyzed to form ammonia, which is adsorbed to the first NOx catalyst 31 or the second NOx catalyst 32. Also, a second addition valve 42 for adding urea water into the exhaust gas is arranged in the exhaust passage 2 at the downstream side of the first NOx catalyst 31 and at the upstream side of the second NOx catalyst 32. The urea water added from the second addition valve 42 is hydrolyzed into ammonia, and the ammonia thus generated is adsorbed to the second NOx catalyst 32. The ammonia adsorbed to the first NOx catalyst 31 and the second NOx catalyst 32 is utilized as the reducing agent in the first NOx catalyst 31 and the second NOx catalyst 32. Here, note that the first addition valve 41 and the second addition valve 42 may add ammonia in place of the urea water. Hereinafter, the precursor of ammonia and ammonia are each referred to as the "reducing agent". The first addition valve 41 in this embodiment corresponds to a first addition device in the present invention, and the second addition valve 42 in this embodiment corresponds to a second addition device in the present invention.

Further, in the exhaust passage 2 at the upstream side of the first addition valve 41, there are arranged an NOx sensor 11 that detects the concentration of NOx in the exhaust gas flowing into the first NOx catalyst 31, an air fuel ratio sensor 12 that detects the air fuel ratio of the exhaust gas flowing into the first NOx catalyst 31, and a temperature sensor 13 that detects the temperature of the exhaust gas flowing into the first NOx catalyst 31. On the internal combustion engine 1, there are mounted fuel injection valves 6 (though only one is shown) for injecting fuel into individual cylinders, respectively. Moreover, an intake passage 7 is connected to the internal combustion engine 1. An air flow meter 23 for detecting the amount of intake air in the internal combustion engine 1 is arranged in the intake passage 7.

Then, an ECU 10, which is an electronic control unit, is provided as a control device in combination with the internal combustion engine 1. The ECU 10 controls the internal combustion engine 1, an exhaust gas purification apparatus, and so on. A crank position sensor 21 and an accelerator opening sensor 22, in addition to the NOx sensor 11, the air fuel ratio sensor 12, the temperature sensor 13, and the air flow meter 23 as mentioned above, are electrically connected to the ECU 10, so that the detected values of these individual sensors are passed or transmitted to the ECU 10.

The ECU 10 is able to grasp the operating state of the internal combustion engine 1, such as the engine rotational speed based on the detection of the crank position sensor 21, the engine load based on the detection of the accelerator opening sensor 22, etc. Here, note that in this embodiment, the NOx in the exhaust gas flowing into the first NOx catalyst 31 is able to be detected by the NOx sensor 11, but the NOx contained in the exhaust gas discharged from the internal combustion engine 1 (the exhaust gas before being purified or reduced in the first NOx catalyst 31, i.e., the exhaust gas flowing into the first NOx catalyst 31) has relation with the operating state of the internal combustion engine 1, and hence, is also able to be estimated based on the above-mentioned operating state of the internal combustion engine 1. Also, the ECU 10 is able to estimate the temperature of the first NOx catalyst 31 based on the temperature of the exhaust gas detected by the temperature sensor 13. In addition, the temperature sensor 13 may be a sensor that detects the temperature of the first NOx catalyst 31, in place of the temperature of the exhaust gas. Here, note that the temperature of the first NOx catalyst 31 has relation with the operating state of the internal combustion engine 1, so it is also possible to estimate the temperature of the first NOx catalyst 31 based on the above-mentioned operating state of the internal combustion engine 1. Moreover, the ECU 10 can calculate the flow rate of the exhaust gas based on the detected value of the air flow meter 23 and the amount of fuel injection from each of the fuel injection valves 6. On the other hand, the first addition valve 41, the second addition valve 42 and the fuel injection valves 6 are connected to the ECU 10 through electrical wiring, so that they are controlled by the ECU 10.

The ECU 10 estimates the amounts of adsorption of ammonia in the first NOx catalyst 31 and the second NOx catalyst 32, respectively. Here, note that in the following, when the first NOx catalyst 31 and the second NOx catalyst 32 are not distinguished from each other, they are each simply referred to as an NOx catalyst 3. Also, in the following, when the first addition valve 41 and the second addition valve 42 are not distinguished from each other, they are each simply referred to as an addition valve 4.

In this embodiment, the amount of adsorption of ammonia in each NOx catalyst 3 is calculated by integrating an amount of change per unit time of the amount of adsorption of ammonia in the NOx catalyst 3. This calculation is carried out by means of the ECU 10 in a repeated manner. The amount of change per unit time of the amount of adsorption of ammonia in the NOx catalyst 3 can be obtained by subtracting an amount of decrease per unit time of the amount of adsorption of ammonia from an amount of increase per unit time thereof. Here, in the first NOx catalyst 31, the amount of increase per unit time of the amount of adsorption of ammonia is decided according to the amount of the additive agent per unit time added from the first addition valve 41. On the other hand, in the second NOx catalyst 32, the amount of increase per unit time of the amount of adsorption of ammonia is decided according to the amount of addition per unit time added from the second addition valve 42, and the amount of ammonia per unit time desorbed from the first NOx catalyst 31 (to be described later). Here, note that the amount of increase per unit time of the amount of adsorption of ammonia in each NOx catalyst 3 is also hereinafter referred to as "the amount of supply of ammonia".

In addition, the amount of decrease per unit time of the amount of adsorption of ammonia in each NOx catalyst 3 is a total amount of an amount of additive agent consumed per unit time in the NOx catalyst 3 (hereinafter, also referred to as an "amount of consumption of ammonia"), and an amount of additive agent desorbed per unit time from the NOx catalyst 3 (hereinafter, also referred to as an "amount of desorption of ammonia"). Then, the amount of adsorption of ammonia in each NOx catalyst 3 at the current point in time is calculated by integrating an amount of change per unit time of the amount of adsorption of ammonia in the NOx catalyst 3.

The amount of consumption of ammonia is related to the NOx reduction rate in each NOx catalyst 3, the flow rate of exhaust gas, and the concentration of NOx in the exhaust gas flowing into the NOx catalyst 3 (hereinafter, also referred to as the concentration of incoming NOx), and hence, can be calculated based on these values. Here, note that the flow rate of exhaust gas is correlated with the amount of intake air detected by the air flow meter 23, and so may be calculated based on the amount of intake air, or it may be detected by a sensor. The concentration of incoming NOx in the first NOx catalyst 31 can be detected by the NOx sensor 11. In addition, the concentration of incoming NOx in the second NOx catalyst 32 is equal to the concentration of NOx in the exhaust gas flowing out from the first NOx catalyst 31. The concentration of NOx in the exhaust gas flowing out from the first NOx catalyst 31 can be calculated from the concentration of NOx in the exhaust gas flowing into the first NOx catalyst 31, and the NOx reduction rate in the first NOx catalyst 31. The NOx reduction rate is related to the temperature of each NOx catalyst 3, the flow rate of exhaust gas, and the amount of adsorption of ammonia in the NOx catalyst 3, and can be calculated based on these values. Here, note that for the amount of adsorption of ammonia in each NOx catalyst 3, there is used the value calculated last time (the last value) at the time of calculating the amount of adsorption of ammonia in a repeated manner. The relation among them may also have been made into a map in advance. Here, note that the temperature of the second NOx catalyst 32 can also be estimated based on the detected value of the temperature sensor 13 and the operating state of the internal combustion engine 1, or can also be detected by a sensor which is separately provided for detecting the temperature of the second NOx catalyst 32.

Moreover, the amount of desorption of ammonia in each NOx catalyst 3 is related to the temperature of the NOx catalyst 3, and the last value of the amount of adsorption of ammonia in the NOx catalyst 3, and so, it can be calculated based on these values. If the relation among the temperature of the NOx catalyst 3, the last value of the amount of adsorption of ammonia therein, and the amount of desorption of ammonia has been obtained in advance by experiments, simulations or the like, the amount of desorption of ammonia can be obtained based on the temperature of the NOx catalyst 3 and the amount of adsorption of ammonia therein. The relation among them may also have been made into a map in advance.

As described above, it is possible to calculate the amount of change per unit time of the amount of adsorption of ammonia in each NOx catalyst 3. The amount of adsorption of ammonia at the current point in time can be calculated by integrating this value. Here, note that the amount of change in the amount of adsorption of ammonia is calculated at each operation period of the ECU 10, and the amount of adsorption of ammonia at the current point in time can also be calculated by integrating this amount of change. The amount of adsorption of ammonia in the NOx catalyst 3 may be estimated not only by the above-mentioned method, but also by other well-known methods.

In addition, the ECU 10 carries out control to add the additive agent from each addition valve 4. The ECU 10 controls to add the additive agent from each addition valve 4 so that the amount of adsorption of ammonia in each NOx catalyst 3 becomes a target value of the amount of adsorption of ammonia (hereinafter, also referred to as a target amount of adsorption). In this case, the ECU 10 decides the amount of addition of the additive agent per unit time according to an amount of decrease in the amount of adsorption of ammonia from the target amount of adsorption. Here, note that the target amount of adsorption in each NOx catalyst 3 is obtained by experiments, simulations, or the like in advance so that the NOx reduction rate in the entire system falls in the allowable range.

For example, in the first NOx catalyst 31, the amount of decrease in the amount of adsorption of ammonia is a total amount of the amount of consumption of ammonia and the amount of desorption of ammonia. Accordingly, in cases where the target amount of adsorption is fixed, the amount of addition of the additive agent from the first addition valve 41 is decided so that the additive agent of an amount corresponding to the total amount of the amount of consumption of ammonia and the amount of desorption of ammonia is added. Here, note that in cases where the target amount of adsorption in the first NOx catalyst 31 changes, the amount of addition of the additive agent from the first addition valve 41 is made to change according to an amount of change in the target amount of adsorption. On the other hand, in the second NOx catalyst 32, the ammonia having flowed out from the first NOx catalyst 31 is supplied thereto, so the amount of decrease in the amount of adsorption of ammonia becomes a value which is obtained by subtracting the amount of supply of ammonia from the total amount of the amount of consumption of ammonia and the amount of desorption of ammonia. Accordingly, in cases where the target amount of adsorption is fixed, the additive agent is added from the second addition valve 42 so that the additive agent of an amount according to the value obtained by subtracting the amount of supply of ammonia from the total amount of the amount of consumption of ammonia and the amount of desorption of ammonia is added. In the second NOx catalyst 32, in cases where the value obtained by subtracting the amount of supply of ammonia from the total amount of the amount of consumption of ammonia and the amount of desorption of ammonia is a negative value (i.e., in cases where ammonia has been supplied to an excessive extent), the amount of addition of the additive agent from the second addition valve 42 is made to be zero. In addition, in cases where the target amount of adsorption in the second NOx catalyst 32 changes, the amount of addition of the additive agent from the second addition valve 42 is made to change according to an amount of change in the target amount of adsorption. As described above, the control to add the additive agent from each addition valve 4 so as to compensate for the amount of decrease in the amount of adsorption of ammonia is hereinafter referred to as normal control.

Here, when the load of the internal combustion engine 1 increases suddenly and the temperature of the exhaust gas becomes high, the temperature of the first NOx catalyst 31 goes up, whereby the amount of ammonia able to be adsorbed to the first NOx catalyst 31 decreases. For this reason, in cases where a sufficient amount of ammonia has been adsorbed to the first NOx catalyst 31, the first NOx catalyst 31 becomes unable to have adsorbed the ammonia due to a rise in temperature thereof, so that the ammonia flows out from the first NOx catalyst 31. On the other hand, even if the load of the internal combustion engine 1 increases, the temperature of the second NOx catalyst 32 arranged at a downstream side portion of the exhaust passage 2 is hard to rise. For that reason, the ammonia having flowed out from the first NOx catalyst 31 is adsorbed to the second NOx catalyst 32. As a result of this, the amount of adsorption of ammonia in the second NOx catalyst 32 becomes excessive.

In contrast to this, in this embodiment, in cases where the first NOx catalyst 31 and the second NOx catalyst 32 have been activated, the amount of additive agent to be added from the first addition valve 41 is made to decrease more, in the case where the amount of adsorption of ammonia in the second NOx catalyst 32 has exceeded a predetermined upper limit amount, than in the case where it has not exceeded. That is, in the case where the amount of adsorption of ammonia in the second NOx catalyst 32 has exceeded the predetermined upper limit amount, the amount of additive agent to be added from the first addition valve 41 is decreased more than at the time of the normal control. In this manner, controlling to decrease the amount of additive agent to be added from the first addition valve 41 more than at the time of the normal control is hereinafter referred to as decrease control. In this embodiment, the ECU 10 functions as a control device in the present invention, by carrying out the decrease control.

Here, note that decreasing the amount of additive agent to be added from the first addition valve 41 also includes decreasing the amount of addition of the additive agent to zero. That is, the additive agent may not be added from the first addition valve 41. The addition of the additive agent from the second addition valve 42 is carried out by the above-mentioned normal control. In this case, while the amount of adsorption of ammonia in the second NOx catalyst 32 has exceeded the predetermined upper limit amount, the additive agent is not added from the second addition valve 42, even if the value obtained by subtracting the amount of supply of ammonia from the total amount of the amount of consumption of ammonia and the amount of desorption of ammonia is a positive value. This predetermined upper limit amount is hereinafter referred to as a first threshold value. The first threshold value is an amount of adsorption of ammonia which is more than the target amount of adsorption and in which an amount of ammonia flowing out from the second NOx catalyst 32 becomes an upper limit value of the allowable range, or an amount of adsorption of ammonia which is given a margin from, or is adequately smaller than, the amount of adsorption of ammonia in which the amount of ammonia flowing out from the second NOx catalyst 32 becomes the upper limit value of the allowable range.

Here, by decreasing the amount of addition of the additive agent from the first addition valve 41 more than at the time of the normal control, an amount of ammonia supplied to the first NOx catalyst 31 becomes smaller with respect to an amount of ammonia consumed in the first NOx catalyst 31, so an amount of adsorption of ammonia in the first NOx catalyst 31 decreases gradually. For that reason, the NOx reduction rate in the first NOx catalyst 31 drops, and an amount of NOx flowing out from the first NOx catalyst 31 increases. Accordingly, an amount of NOx flowing into the second NOx catalyst 32 increases, and an amount of ammonia adsorbed to the second NOx catalyst 32 is decreased by reducing the NOx. In addition, an amount of ammonia flowing out from the first NOx catalyst 31 also decreases, whereby an amount of ammonia newly adsorbed to the second NOx catalyst 32 can also be made to decrease.

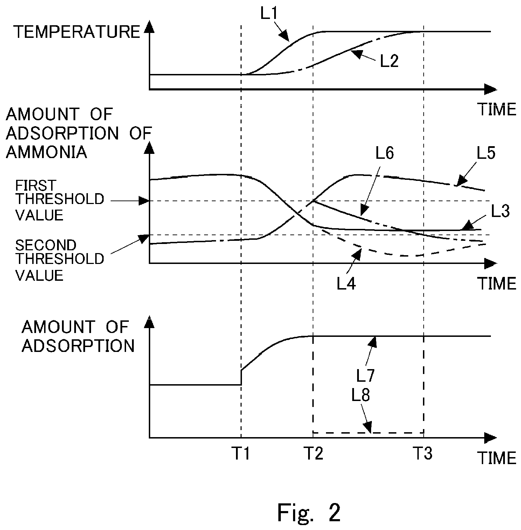

Fig. 2 is a time chart showing the changes over time of various kinds of values. In Fig. 2, in order from the top, there are shown the temperatures of the first NOx catalyst 31 and the second NOx catalyst 32, the amounts of adsorption of ammonia (or the amounts of ammonia adsorption) in the first NOx catalyst 31 and the second NOx catalyst 32, and the amount of addition of the additive agent from the first addition valve 41. L1 in temperature indicates the temperature of the first NOx catalyst 31, and L2 indicates the temperature of the second NOx catalyst 32. L3 in the amount of ammonia adsorption indicates the amount of adsorption of ammonia in the first NOx catalyst 31 in the case of carrying out only the normal control, and L4 indicates the amount of adsorption of ammonia in the first NOx catalyst 31 in the case of carrying out the decrease control in the middle of the control. Also, L5 in the amount of ammonia adsorption indicates the amount of adsorption of ammonia in the second NOx catalyst 32 in the case of carrying out only the normal control, and L6 indicates the amount of adsorption of ammonia in the second NOx catalyst 32 in the case of carrying out the decrease control in the middle of the control. In addition, L7 in the amount of addition indicates a case where only the normal control is carried out, and L8 indicates a case where the decrease control is carried out in the middle of the control.

T1 indicates a point in time at which the load of the internal combustion engine 1 starts to rise; T2 indicates a point in time at which the amount of adsorption of ammonia in the second NOx catalyst 32 exceeds the first threshold value; and T3 indicates a point in time at which the amount of adsorption of ammonia in the second NOx catalyst 32 becomes smaller than a second threshold value by means of the decrease control. Here, note that in this embodiment, the second threshold value corresponds to a predetermined lower limit amount in the present invention. The second threshold value is set, for example, so that the NOx reduction rate in the entire system (here, a sum of the NOx reduction rates in the first NOx catalyst and the second NOx catalyst) falls within the allowable range.

The load of the internal combustion engine 1 increases from T1, and the temperature of the first NOx catalyst 31 goes up according to this increasing load. Thereafter, the temperature of the second NOx catalyst 32 goes up late. The amount of ammonia able to be adsorbed to the first NOx catalyst 31 decreases with the temperature rise of the first NOx catalyst 31. As a result of this, ammonia desorbs from the first NOx catalyst 31, so the amount of adsorption of ammonia in the first NOx catalyst 31 decreases. The ammonia thus desorbed is adsorbed to the second NOx catalyst 32, so that the amount of adsorption of ammonia in the second NOx catalyst 32 increases.

In a period of time from T1 to T2, the normal control is carried out, and ammonia becomes apt to desorb from the first NOx catalyst 31 in accordance with the temperature rise of the first NOx catalyst 31, so the amount of addition of the additive agent from the first addition valve 41 increases. However, the amount of desorbing ammonia becomes more than the amount of newly adsorbing ammonia, so the amount of adsorption of ammonia in the first NOx catalyst 31 decreases gradually from the target amount of adsorption. At this time, the activity of the first NOx catalyst 31 is increased due to the temperature rise thereof, so that NOx can be removed or reduced even in cases where the amount of adsorption of ammonia is small.

In cases where the normal control is supposed to be carried out at and after T2 as conventionally, the additive agent will be added from the first addition valve 41 at and after T2, so the decrease in the amount of adsorption of ammonia in the first NOx catalyst 31 will be suppressed. In this case, the amount of addition of the additive agent from the first addition valve 41 is adjusted in such a manner that the purification or reduction performance in the first NOx catalyst 31 can be exhibited to a sufficient extent. Here, note that an upper limit is provided for the amount of addition of the additive agent from the first addition valve 41, in order to suppress the outflow of ammonia from the first NOx catalyst 31, and the upper limit of the amount of addition of the additive agent has been reached at and after T2. However, because the outflow of ammonia from the first NOx catalyst 31 continues and NOx hardly flows out from the first NOx catalyst 31, the amount of adsorption of ammonia in the second NOx catalyst 32 continues to increase. Thereafter, when the temperature of the second NOx catalyst 32 also becomes high and the adsorption of ammonia becomes difficult in the second NOx catalyst 32, ammonia will flow out from the second NOx catalyst 32.

On the other hand, when the normal control is changed to the decrease control at T2, the amount of addition of the additive agent from the first addition valve 41 will be decreased. For the amount of addition of the additive agent at the time of this decrease control, there has been obtained in advance an optimum value by experiments, simulations, or the like. The amount of addition of the additive agent is set to become an amount of addition in which NOx is supplied to the second NOx catalyst 32, but ammonia is not supplied thereto, while suppressing the increase in the amount of adsorption of ammonia in the second NOx catalyst 32. Here, note that in the decrease control, the amount of addition of the additive agent can also be set to 0. In the case of changing the normal control to the decrease control, the amount of adsorption of ammonia in the first NOx catalyst 31 is decreased more than in the case where the normal control is carried out continuously. As a result of this, the amount of ammonia flowing out from the first NOx catalyst 31 decreases, and at the same time, the amount of NOx flowing out from the first NOx catalyst increases, so that the amount of adsorption of ammonia in the second NOx catalyst 32 decreases quickly.

When the amount of adsorption of ammonia in the second NOx catalyst 32 decreases to the second threshold value by carrying out the decrease control at T3, the control is returned to the normal control, so the amount of adsorption of ammonia in the first NOx catalyst 31 increases.

In this manner, in this embodiment, the decrease control is continued until the amount of adsorption of ammonia in the second NOx catalyst 32 decreases to the second threshold value after it exceeds the first threshold value, but instead of this, the decrease control may be carried out only while the amount of adsorption of ammonia in the second NOx catalyst 32 exceeds the first threshold value. In this case, the first threshold value and the second threshold value can be considered to be the same value. By doing in this manner, the amount of adsorption of ammonia in the second NOx catalyst 32 can be made equal to or less than the first threshold value. However, in this case, the amount of adsorption of ammonia in the second NOx catalyst 32 changes in a relatively large state, so that the ammonia is apt to flow out from the second NOx catalyst 32. Accordingly, after the amount of adsorption of ammonia in the second NOx catalyst 32 exceeds the first threshold value, the effect of suppressing the outflow of ammonia becomes larger in the case where the decrease control is continued until the amount of adsorption of ammonia in the second NOx catalyst 32 decreases to the second threshold value.

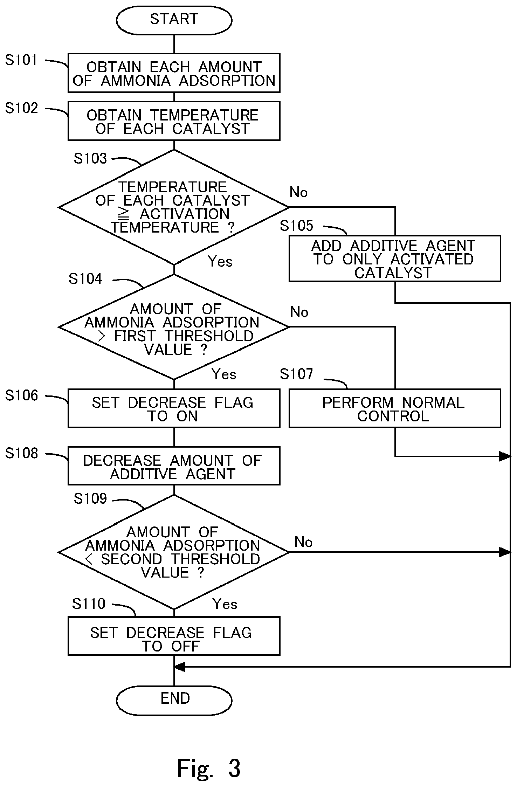

Fig. 3 is a flow chart showing a flow or routine for controlling to add the additive agent according to this embodiment. The flow or routine in this flow chart is carried out by means of the ECU 10 in a repeated manner at each predetermined time interval.

In step S101, the amounts of adsorption of ammonia in the first NOx catalyst 31 and the second NOx catalyst 32 are obtained, respectively. The amounts of adsorption of ammonia have been separately calculated by the ECU 10, and hence, the thus calculated values are read in.

In step S102, the temperatures of the first NOx catalyst 31 and the second NOx catalyst 32 are obtained, respectively. Each of these temperatures may be estimated or may be detected by a temperature sensor.

In step S103, it is determined whether the temperatures of the first NOx catalyst 31 and the second NOx catalyst 32 are equal to or higher than their activation temperature. In cases where the first NOx catalyst 31 and the second NOx catalyst 32 have not been activated, NOx can not be fully removed or reduced in the second NOx catalyst 32 even if the decrease control is carried out, and hence, as a prerequisite for carrying out the decrease control, it is necessary that the first NOx catalyst 31 and the second NOx catalyst 32 should have been activated. In cases where an affirmative determination is made in step S103, the routine goes to step S104, whereas in cases where a negative determination is made, the routine goes to step S105.

In step S105, the additive agent is added to the catalyst which has been activated. At this time, the normal control is carried out with respect to the activated catalyst. That is, in cases where the temperature of the first NOx catalyst 31 is equal to or higher than its activation temperature, the additive agent is added from the first addition valve 41, or in cases where the temperature of the second NOx catalyst 32 is equal to or higher than its activation temperature, the additive agent is added from the second addition valve 42. In addition, when the temperatures of the first NOx catalyst 31 and the second NOx catalyst 32 are both less than the activation temperature, the addition of the additive agent from the first addition valve 41 and the second addition valve 42 are not carried out.

On the other hand, in step S104, it is determined whether the amount of adsorption of ammonia in the second NOx catalyst 32 is larger than the first threshold value. In this step S104, it is determined whether the amount of adsorption of ammonia in the second NOx catalyst 32 is excessive. In cases where an affirmative determination is made in step S104, the routine goes to step S106, whereas in cases where a negative determination is made, the routine goes to step S107.

In step S106, a decrease flag is set to on. The decrease flag is a flag which is set to on when the decrease control is carried out and the normal control is not carried out, and which is set to off when the decrease control is not carried out and the normal control is carried out. On the other hand, in step S107, the normal control is carried out.

In step S108, the amount of addition of the additive agent from the first addition valve 41 is decreased by the decrease control being carried out. The amount of additive agent after being decreased may be a fixed value which has been obtained in advance, or may be a value decided according to a map which has been obtained in advance. The amount of additive agent thus decreased is set so as to suppress the increase in the amount of adsorption of ammonia in the second NOx catalyst 32. In addition, in this step, the amount of addition of additive agent may also be set to 0.

Then, on the other hand, in step S109, it is determined whether the amount of adsorption of ammonia in the second NOx catalyst 32 is smaller than the second threshold value. That is, in this step, it is determined whether the amount of adsorption of ammonia in the second NOx catalyst 32 has been decreased to a sufficient extent. In cases where an affirmative determination is made in step S109, the routine goes to step S110, where the decrease flag is set to off. On the other hand, in cases where a negative determination is made in step S109, the routine in this flow chart is ended. In this manner, the decrease control is carried out until the amount of adsorption of ammonia in the second NOx catalyst 32 becomes smaller than the second threshold value.

As described above, in this embodiment, in cases where the amount of adsorption of ammonia in the second NOx catalyst 32 is excessive, the amount of ammonia flowing out from the first NOx catalyst 31 is made to decrease, and the amount of NOx flowing out from the first NOx catalyst 31 is made to increase, in order to decrease the amount of additive agent to be added from the first addition valve 41. With this, the amount of adsorption of ammonia in the second NOx catalyst 32 can be decreased, thus making it possible to suppress ammonia from flowing out of the second NOx catalyst 32. In addition, the NOx flowing out from the first NOx catalyst 31 can be reduced in the second NOx catalyst 32. Moreover, the amount of outflow of ammonia from the second NOx catalyst 32 can be decreased, thus making it possible to decrease the amount of consumption of the additive agent in the entire system. In this manner, according to this embodiment, the additive agent can be added in an appropriate manner. Further, the amount of addition of the additive agent can be decreased, so the capacity of the tank for storing the additive agent can be made small, and the reduction in size of the system can be attained.

(Modification)

In this modification, even if the amount of adsorption of ammonia in the second NOx catalyst 32 is excessive, in cases where after the cold start of the internal combustion engine 1, etc., only the first NOx catalyst 31 has been activated but the second NOx catalyst 32 has not been activated, the amount of addition of the additive agent from the first addition valve 41 is added. Then, after the second NOx catalyst 32 has been activated, the decrease control is started so that the amount of addition of the additive agent from the first addition valve 41 is decreased. For example, in cases where the internal combustion engine 1 is stopped in a state where the amount of adsorption of ammonia in the second NOx catalyst 32 is excessive, the internal combustion engine 1 can be started in a state where the second NOx catalyst 32 has not been activated and the amount of adsorption of ammonia in the second NOx catalyst 32 is excessive.

Here, in cases where the second NOx catalyst 32 has not been activated, NOx can hardly be reduced in the second NOx catalyst 32, and hence, if NOx is not reduced in the first NOx catalyst 31, the NOx reduction rate in the entire system will drop. That is, when the amount of addition of the additive agent from the first addition valve 41 is decreased just because the amount of adsorption of ammonia in the second NOx catalyst 32 is excessive, it will become difficult to reduce NOx in any of the first NOx catalyst 31 and the second NOx catalyst 32, and accordingly, the NOx reduction rate in the entire system will be decreased. In such a case, the decrease in the NOx reduction rate in the entire system can be suppressed, by reducing NOx in the first NOx catalyst 31 by adding the additive agent from the first addition valve 41.

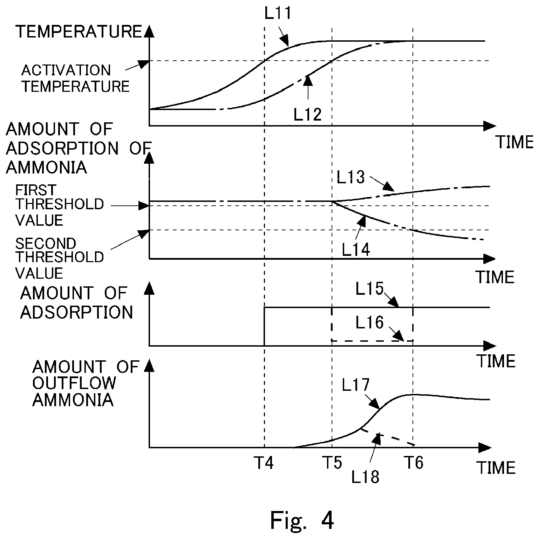

Fig. 4 is a time chart showing the changes over time of various kinds of values after starting of the internal combustion engine 1. In Fig. 4, in order from the top, there are shown the temperatures of the first NOx catalyst 31 and the second NOx catalyst 32, the amount of adsorption of ammonia (or the amount of ammonia adsorption) in the second NOx catalyst 32, the amount of addition of the additive agent from the first addition valve 41, and the amount of ammonia flowing out from the second NOx catalyst 32. L11 in temperature indicates the temperature of the first NOx catalyst 31, and L12 indicates the temperature of the second NOx catalyst 32. Also, L13 in the amount of ammonia adsorption indicates the amount of adsorption of ammonia in the second NOx catalyst 32 in the case of carrying out only the normal control, and L14 indicates the amount of adsorption of ammonia in the second NOx catalyst 32 in the case of carrying out the decrease control in the middle of the control. In addition, L15 and L17 in the amount of addition and the amount of outflow ammonia indicate cases where only the normal control is carried out, and L16 and L18 indicate cases where the decrease control is carried out in the middle of the control. In Fig. 2, there are shown the cases where the temperatures of the first NOx catalyst 31 and the second NOx catalyst 32 are generally higher than their activation temperature, but in Fig. 4, the temperatures of the first NOx catalyst 31 and the second NOx catalyst 32 start from a temperature lower than their activation temperature. For that reason, Fig. 2 and Fig. 4 are different from each other in the magnitude of scale on the axis of ordinate.

T4 indicates a point in time at which the temperature of the first NOx catalyst 31 exceeds its activation temperature; T5 indicates a point in time at which the temperature of the second NOx catalyst 32 exceeds its activation temperature; and T6 indicates a point in time at which the amount of adsorption of ammonia in the second NOx catalyst 32 becomes smaller than the second threshold value by means of the decrease control. Here, note that in this modification, the following explanation will be made on the assumption that the activation temperatures of the first NOx catalyst 31 and the second NOx catalyst 32 are equal to each other, but the activation temperatures of these catalysts may be different from each other.

The amount of adsorption of ammonia in the second NOx catalyst 32 is more than the first threshold value from a point in time of starting of the internal combustion engine 1, but the temperatures of the first NOx catalyst 31 and the second NOx catalyst 32 are lower than their activation temperature until T4, so the addition of the additive agent from the first addition valve 41 is not carried out.

After the starting of the internal combustion engine 1, the temperature of the first NOx catalyst 31 at the upstream side goes up more quickly than that of the second NOx catalyst 32 at the downstream side. For that reason, the first NOx catalyst 31 reaches the activation temperature earlier than the second NOx catalyst 32. Even when the temperature of the first NOx catalyst 31 reaches the activation temperature at T4, the temperature of the second NOx catalyst 32 is lower than the activation temperature. For that reason, the additive agent is added from the first addition valve 41 to the first NOx catalyst 31 so that NOx can be reduced only in the first NOx catalyst 31. The amount of addition of the reducing agent at this time is the same as in the normal control. In this manner, in a period of time from T4 to T5, NOx is reduced in the first NOx catalyst 31. However, when the temperature of the first NOx catalyst 31 becomes high and ammonia desorbs from the first NOx catalyst 31, ammonia will be excessive in the second NOx catalyst 32, so it will become difficult to adsorb ammonia in the second NOx catalyst 32. Accordingly, ammonia may flow out from the second NOx catalyst 32.

When the temperature of the second NOx catalyst 32 reaches the activation temperature at T5, NOx can be reduced in the second NOx catalyst 32. At this time, the amount of adsorption of ammonia in the second NOx catalyst

EP 3 364 007 A1

32 is more than that in the first threshold value. Accordingly, from T5, the amount of addition of the additive agent from the first addition valve 41 is made to decrease, in order to reduce NOx in the second NOx catalyst 32. As a result of this, the NOx, which has not been fully reduced in the first NOx catalyst 31, flows into the second NOx catalyst 32, so the amount of adsorption of ammonia in the second NOx catalyst 32 decreases. In addition, because the amount of addition of the additive agent from the first addition valve 41 is decreased, the amount of ammonia flowing out from the first NOx catalyst 31 decreases. Accordingly, the amount of ammonia flowing into the second NOx catalyst 32 decreases, so the amount of ammonia flowing out from the second NOx catalyst 32 also decreases.

Then, at T6, the amount of adsorption of ammonia in the second NOx catalyst 32 decreases to the second threshold value, so the amount of addition of the additive agent from the first addition valve 41 is returned to its original amount. In this manner, the amount of ammonia flowing out from the second NOx catalyst 32 can be made to decrease.

At the time of the cold start of the internal combustion engine 1, etc., in the flow chart shown in Fig. 3, a negative determination is made in step S103, and the processing of step S105 is carried out until the first addition valve 41 and the second addition valve 42 both reach the activation temperature. For example, in step S105, the addition of the additive agent from the first addition valve 41 is stopped until T4 in Fig. 4. In step S105, the additive agent is added from the first addition valve 41 in the period of time from T4 to T5. Then, at and after T5, an affirmative determination is made in step S103, and the decrease control is carried out. Thereafter, when it comes to T6, an affirmative determination is made in step S109, and the flow or routine is returned to the normal control.

As described above, according to this modification, the decrease control is started after the second NOx catalyst 32 has been activated, and hence, in a period of time until the second NOx catalyst 32 is activated, NOx can be reduced in the first NOx catalyst 31.

(Second Embodiment)

In a second embodiment, the amount of addition of the additive agent from the first addition valve 41 is adjusted, so that the NOx reduction rate in the entire system (i.e., the sum of the NOx reduction rates in the first NOx catalyst and the second NOx catalyst) falls within the allowable range. The other components and so on in this second embodiment are the same as those in the first embodiment, so the explanation thereof is omitted. Here, note that the NOx reduction rate in the entire system is calculated by the ECU 10.

Here, the amount of adsorption of ammonia in the second NOx catalyst 32 has exceeded the first threshold value, and so, the decrease control is carried out thereby to decrease the amount of addition of the additive agent from the first addition valve 41, whereby the amount of adsorption of ammonia in the first NOx catalyst 31 is decreased gradually. For that reason, the NOx reduction rate in the first NOx catalyst 31 decreases gradually. On the other hand, in the second NOx catalyst 32, when the amount of adsorption of ammonia has exceeded the first threshold value, the NOx reduction rate becomes relatively high, but because the amount of adsorption of ammonia in the second NOx catalyst 32 decreases gradually, the NOx reduction rate in the second NOx catalyst 32 also drops gradually. Accordingly, the NOx reduction rate in the entire system can decrease gradually. For that reason, when the amount of addition of the additive agent from the first addition valve 41 is kept decreased uniformly during the decrease control, there is a fear that the NOx reduction rate in the entire system may drop lower than the allowable range, in a period of time until the amount of adsorption of ammonia in the second NOx catalyst 32 decreases to the second threshold value.

Accordingly, in this second embodiment, in cases where the NOx reduction rate in the entire system becomes smaller than a reduction rate threshold value, the degree of decreasing the additive agent to be added from the first addition valve 41 in the decrease control is made mitigated. The amount of additive agent is made to increase gradually in a range where the amount of additive agent is smaller than at the time of the normal control, so that the NOx reduction rate in the entire system may become equal to or larger than the reduction rate threshold value. Here, note that the reduction rate threshold value may be a lower limit value of the allowable range, but may also be a value a little larger than the lower limit value of the allowable range so as to provide a margin. In this case, as the reduction rate threshold value, there may have been obtained by experiments, simulations or the like a value in which the NOx reduction rate in the entire system does not become smaller than the lower limit value of the allowable range.

Here, in the first embodiment, too, the NOx reduction rate in the entire system can be suppressed from becoming smaller than the reduction rate threshold value, by setting the second threshold value to a relatively large value. However, a return to the normal control will be performed, by terminating the decrease control in a state where the amount of adsorption of ammonia in the second NOx catalyst 32 is relatively large, and hence, there is a fear that the amount of adsorption of ammonia in the second NOx catalyst 32 may soon exceed the first threshold value. That is, ammonia becomes apt to flow out from the second NOx catalyst 32. On the other hand, as in this second embodiment, by setting the second threshold value to a relatively small value, and adjusting the amount of addition of the additive agent from the first addition valve 41 according to the NOx reduction rate in the entire system, it is possible to decrease the amount of adsorption of ammonia in the second NOx catalyst 32 to a sufficient extent, while suppressing the decrease of the NOx reduction rate.

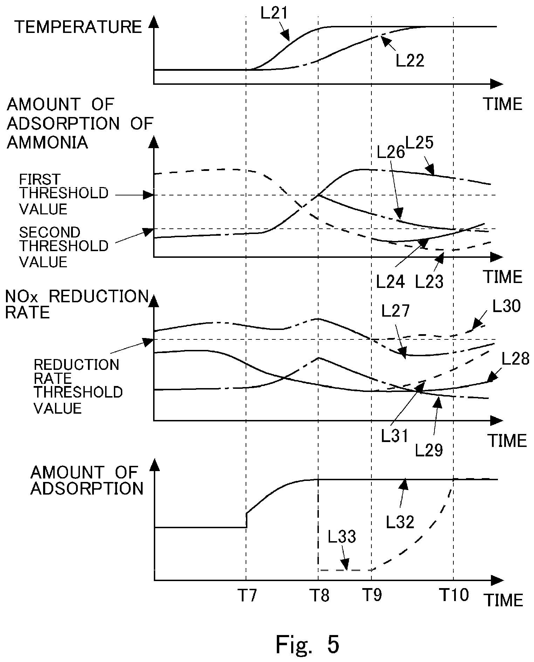

Fig. 5 is a time chart showing the changes over time of various kinds of values. In Fig. 5, in order from the top, there are shown the temperatures of the first NOx catalyst 31 and the second NOx catalyst 32, the amounts of adsorption of ammonia (or the amounts of ammonia adsorption) in the first NOx catalyst 31 and the second NOx catalyst 32, the NOx reduction rates in the first NOx catalyst 31 and the second NOx catalyst 32 and the entire system, and the amount of addition of the additive agent from the first addition valve 41. L21 in temperature indicates the temperature of the first NOx catalyst 31, and L22 indicates the temperature of the second NOx catalyst 32. L23 in the amount of ammonia adsorption indicates the amount of adsorption of ammonia in the first NOx catalyst 31 in the case of carrying out the normal control according to the first embodiment, and L24 indicates the amount of adsorption of ammonia in the first NOx catalyst 31 in the case of carrying out the decrease control according to this second embodiment. Also, L25 in the amount of ammonia adsorption indicates the amount of adsorption of ammonia in the second NOx catalyst 32 in the case of carrying out only the normal control, and L26 indicates the amount of adsorption of ammonia in the second NOx catalyst 32 in the case of carrying out the decrease control in the middle of the control. In addition, L27 in the NOx reduction rate indicates the NOx reduction rate in the entire system in the case of carrying out the decrease control according to the first embodiment, and L28, L29 indicate the NOx reduction rate in the first NOx catalyst 31 and the NOx reduction rate in the second NOx catalyst 32, respectively, in the case of carrying out the decrease control according to the first embodiment. Moreover, L30 in the NOx reduction rate indicates the NOx reduction rate in the entire system in the case of carrying out the decrease control according to this second embodiment. L31 in the NOx reduction rate indicates the NOx reduction rate in the first NOx catalyst 31 in the case of carrying out the decrease control according to this second embodiment. Further, L32 in the amount of addition indicates a case where only the normal control is carried out, and L33 indicates a case where the decrease control is carried out from the middle of the control.

T7 indicates a point in time at which the load of the internal combustion engine 1 starts to rise; T8 indicates a point in time at which the amount of adsorption of ammonia in the second NOx catalyst 32 exceeds the first threshold value; T9 indicates a point in time at which the NOx reduction rate in the entire system becomes smaller than the reduction rate threshold value; and T10 indicates a point in time at which the amount of adsorption of ammonia in the second NOx catalyst 32 becomes smaller than the second threshold value by means of the decrease control.

The NOx reduction rate in the first NOx catalyst 31 and the NOx reduction rate in the second NOx catalyst 32 change according to the amounts of adsorption of ammonia in the individual catalysts, respectively. For that reason, from T7 to T8, the NOx reduction rate in the first NOx catalyst 31 drops according to the decreasing amount of adsorption of ammonia in the first NOx catalyst 31, and the NOx reduction rate in the second NOx catalyst 32 rises according to the increasing amount of adsorption of ammonia in the second NOx catalyst 32. Then, when the decrease control is started at T8, the amount of adsorption of ammonia in the second NOx catalyst 32 decreases. In that case, the NOx reduction rate in the second NOx catalyst 32 also drops. In addition, at this time, the amount of adsorption of ammonia in the first NOx catalyst 31 also decreases. For that reason, at and after T8, the NOx reduction rate in the entire system drops gradually.

When the NOx reduction rate in the entire system becomes smaller than the reduction rate threshold value at T9, the amount of addition of the additive agent from the first addition valve 41 is made to increase gradually in a range where the amount of the additive agent is smaller than at the time of the normal control, so that the NOx reduction rate in the entire system may become equal to or larger than the reduction rate threshold value. At this time, the amount of adsorption of ammonia in the first NOx catalyst 31 begins to increase, and the NOx reduction rate in the first NOx catalyst 31 also rises. If the amount of addition of the additive agent from the first addition valve 41 is fixed in an amount of addition most decreased from T8 to T9, the NOx reduction rate in the entire system will become smaller than the reduction rate threshold value at and after T9, as indicated by L27. In this second embodiment, from T9, the amount of addition of the additive agent from the first addition valve 41 is adjusted in a range where an increase in the amount of adsorption of ammonia in the second NOx catalyst 32 can be suppressed. Here, note that the amount of addition of the additive agent from the first addition valve 41 may also be controlled in a feedback manner, so that the NOx reduction rate in the entire system becomes equal to or larger than the reduction rate threshold value.

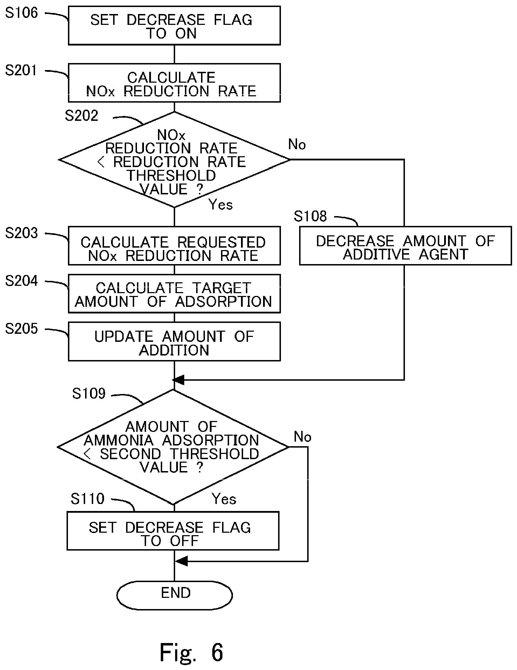

Fig. 6 is a flow chart showing a flow or routine for controlling to add the additive agent according to this second embodiment. The flow or routine in this flow chart is carried out by means of the ECU 10 in a repeated manner at each predetermined time interval. Here, note that for those steps in which the same processings as in the flow chart shown in Fig. 3 are carried out, the same reference numerals and characters are attached and the explanation thereof is omitted. In addition, the processings in and before step S106 in Fig. 6 are the same as those in the flow chart shown in Fig. 3, so the explanation thereof is omitted.

In the flow chart or routine shown in Fig. 6, when the processing of step S106 ends, the routine goes to step S201. In step S201, an NOx reduction rate CCAL in the entire system is calculated. Here, an NOx reduction rate C1CAL in the first NOx catalyst 31 is associated with an amount of intake air GA in the internal combustion engine 1, a temperature TA of the first NOx catalyst 31, and an amount of adsorption of ammonia Q1 in the first NOx catalyst 31, and so is calculated by the following function F1.

$$C1CAL = F1(GA, TA, Q1)$$

Similarly, an NOx reduction rate C2CAL in the second NOx catalyst 32 is associated with the amount of intake air GA in the internal combustion engine 1, a temperature TB of the second NOx catalyst 32, and an amount of adsorption of ammonia Q2 in the second NOx catalyst 32, and so can be calculated by the following function F2.

$$C2CAL = F2(GA, TB, Q2)$$

Then, the NOx reduction rate CCAL in the entire system can be calculated by the following expression.

$$CCAL = C1CAL + (1 - C1CAL) \times C2CAL$$

In step S202, it is determined whether the NOx reduction rate CCAL in the entire system is smaller than the reduction rate threshold value. In this step S202, it is determined whether it is necessary to alleviate the degree of decreasing the additive agent to be added from the first addition valve 41. In cases where an affirmative determination is made in step S202, the routine goes to step S203, whereas in cases where a negative determination is made, the routine goes to step S108, where the additive agent to be added from the first addition valve 41 is set to the amount of addition set in the first embodiment.

In step S203, an NOx reduction rate C1REQ requested for the first NOx catalyst 31 (hereinafter, a requested NOx reduction rate) is calculated. The requested NOx reduction rate C1REQ for the first NOx catalyst 31 is calculated as an NOx reduction rate in the first NOx catalyst 31 at which the NOx reduction rate in the entire system becomes a reduction rate threshold value CCALTRG. That is, it is calculated by the following expression.

$$C1REQ = (CCALTRG - C2CAL)/(1 - C2CAL)$$

In step S204, a target amount of adsorption Q1TRG in the first NOx catalyst 31 is calculated. The target amount of adsorption Q1TRG in the first NOx catalyst 31 is calculated as an amount of adsorption of ammonia in the first NOx catalyst 31 in which the requested NOx reduction rate in the first NOx catalyst 31 calculated in step S203 is attained. The target amount of adsorption Q1TRG in the first NOx catalyst 31 is associated with the requested NOx reduction rate in the first NOx catalyst 31 C1REQ, the temperature TA of the first NOx catalyst 31, and the amount of intake air GA in the internal combustion engine 1, and is calculated by the following function F3.

$$Q1TRG = F3(C1REQ, TA, GA)$$

In step S205, the amount of addition of the additive agent from the first addition valve 41 is updated. The amount of addition QADD1 of the additive agent from the first addition valve 41 is calculated as an amount of addition of the additive agent in which the target amount of adsorption Q1TRG in the first NOx catalyst 31 calculated in step S204 is attained. The amount of addition QADD1 of the additive agent from the first addition valve 41 is associated with the target amount of adsorption Q1TRG in the first NOx catalyst 31, the temperature TA of the first NOx catalyst 31, and the amount of intake air GA in the internal combustion engine 1, and is calculated by the following function F4.

$$QADD1 = F4(Q1TRG, TA, GA)$$

At this time, the amount of addition QADD1 of the additive agent from the first addition valve 41 increases, so that the NOx reduction rate in the entire system becomes equal to or larger than the reduction rate threshold value. When the processing of step S205 ends, the routine goes to step S109.

Here, note that the amount of addition of the additive agent capable of exhibiting the requested NOx reduction rate C1 REQ in the first NOx catalyst 31 may be directly calculated by integrating the processing of step S204 and the processing of step S205, or may be obtained by using a map, etc.

As described above, according to this second embodiment, it is possible to further decrease the amount of adsorption of ammonia in the second NOx catalyst 32, while suppressing the decrease of the NOx reduction rate in the entire system. For this reason, the outflow of ammonia from the second NOx catalyst 32 can be suppressed in a more reliable manner. In addition, the second threshold value can be made smaller, thereby making it possible to suppress the outflow of ammonia in a more reliable manner. Thus, the effect of decreasing the amount of consumption of the additive agent is large.

(Third Embodiment)

In a third embodiment, in cases where the NOx reduction rate in the entire system is varied due to variations in the flow rate of exhaust gas and the amount of NOx flowing into the first NOx catalyst 31, the amount of addition of the additive agent from the first addition valve 41 is adjusted, so that the NOx reduction rate in the entire system falls within the allowable range. The other components and so on in this third embodiment are the same as those in the first embodiment, so the explanation thereof is omitted.

Here, in cases where the decrease control is carried out, when the amount of NOx flowing into the first NOx catalyst 31 is suddenly increased due to a sudden increase in the flow rate of the exhaust gas or in the amount of NOx discharged from the internal combustion engine 1, there is a fear that when the amounts of adsorption of ammonia in the first NOx catalyst 31 and the second NOx catalyst 32 are small, the NOx reduction rate in the entire system may become smaller than the reduction rate threshold value.

Accordingly, in this third embodiment, in cases where the NOx reduction rate in the entire system becomes smaller than the reduction rate threshold value, the degree of decreasing the additive agent to be added from the first addition valve 41 in the decrease control is made mitigated. The amount of additive agent is set so that the NOx reduction rate in the entire system becomes equal to or larger than the reduction rate threshold value.

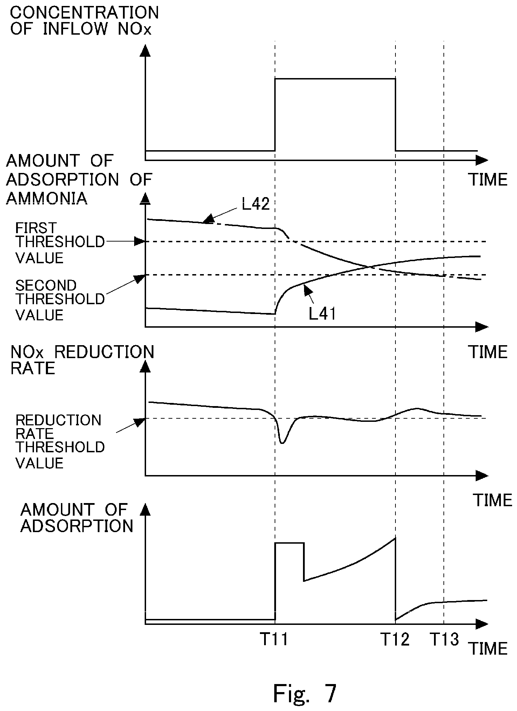

Fig. 7 is a time chart showing the changes over time of various kinds of values during execution of decrease control. This time chart is in the middle of the decrease control being carried out. In Fig. 7, in order from the top, there are shown the concentration of NOx in the exhaust gas flowing into the first NOx catalyst 31 (inflow NOx concentration), the amounts of adsorption of ammonia (or the amounts of ammonia adsorption) in the first NOx catalyst 31 and the second NOx catalyst 32, the NOx reduction rate in the entire system, and the amount of addition of the additive agent from the first addition valve 41. L41 in the amount of ammonia adsorption indicates the first NOx catalyst 31, and L42 indicates the second NOx catalyst 32. T11 indicates a point in time at which the NOx reduction rate in the entire system becomes smaller than the reduction rate threshold value as a result of a rise in the concentration of NOx in the exhaust gas flowing into the first NOx catalyst 31; T12 indicates a point in time at which the concentration of NOx in the exhaust gas flowing into the first NOx catalyst 31 drops; and T13 indicates a point in time at which the amount of adsorption of ammonia in the second NOx catalyst 32 becomes smaller than the second threshold value. The decrease control is started from or before T11, and the decrease control is continued at and after T13.

From or before T11, the decrease control has been carried out because the amount of adsorption of ammonia in the second NOx catalyst 32 is more than the first threshold value, and the amount of addition of the additive agent from the first addition valve 41 has been decreased. At this time, the concentration of NOx in the exhaust gas flowing into the first NOx catalyst 31 is relatively low, and so the NOx reduction rate in the entire system has become equal to or larger than the reduction rate threshold value.

The operating state of the internal combustion engine 1 changes from T11, so that the concentration of NOx in the exhaust gas flowing into the first NOx catalyst 31 during the decrease control becomes relatively high. At this time, the amount of adsorption of ammonia in the second NOx catalyst 32 is large, but the amount of adsorption of ammonia in the first NOx catalyst 31 is small, and hence, NOx can not be fully reduced in the first NOx catalyst 31 and the second NOx catalyst 32. For that reason, the NOx reduction rate in the entire system becomes smaller than the reduction rate threshold value. In contrast to this, the amount of addition of the additive agent from the first addition valve 41 is increased in a range where the amount of the additive agent is smaller than at the time of the normal control. Here, note that in the example shown in Fig. 7, in order to quickly raise the NOx reduction rate in the entire system, the amount of addition of the additive agent from the first addition valve 41 is once made to increase greatly in a range where the amount of the additive agent is smaller than at the time of the normal control, and after the amount of the additive agent is made to decrease, the amount of addition of the additive agent from the first addition valve 41 is made to increase gradually according to the NOx reduction rate in the entire system in a range where the amount of the additive agent is smaller than at the time of the normal control. At this time, the amount of adsorption of ammonia in the first NOx catalyst 31 begins to increase, and the NOx reduction rate in the first NOx catalyst 31 also rises. From T11 to T12, the amount of addition of the additive agent from the first addition valve 41 is set in a range where the amount of adsorption of ammonia in the second NOx catalyst 32 does not increase. Here, note that the amount of addition of the additive agent from the first addition valve 41 may also be controlled in a feedback manner, so that the NOx reduction rate in the entire system becomes equal to or larger than the reduction rate threshold value.

At T12, the operating state of the internal combustion engine 1 changes, and the concentration of NOx in the exhaust gas flowing into the first NOx catalyst 31 becomes relatively low. At this time, the amounts of adsorption of ammonia in the first NOx catalyst 31 and the second NOx catalyst 32 are sufficiently large with respect to the amount of NOx flowing into the first NOx catalyst 31, so the amount of addition of the additive agent from the first addition valve 41 is decreased more than the amount of addition in the period of time from T11 to T12, thereby promoting to decrease the amount of adsorption of ammonia in the second NOx catalyst 32.

Then, when the amount of adsorption of ammonia in the second NOx catalyst 32 becomes smaller than the second threshold value at T13, the decrease control is changed to the normal control.

A flow or routine for the control to add the additive agent according to this third embodiment is the same as that in the flow chart shown in Fig. 6, and hence, the explanation thereof is omitted.

As described above, according to this third embodiment, it is possible to further decrease the amount of adsorption of ammonia in the second NOx catalyst 32, while suppressing the decrease of the NOx reduction rate in the entire system. For this reason, the outflow of ammonia from the second NOx catalyst 32 can be suppressed in a more reliable manner.

## Claims

**1.** An exhaust gas purification apparatus for an internal combustion engine (1) comprising:

a first NOx catalyst (31) that is arranged in an exhaust passage (2) of the internal combustion engine (1) and is an NOx selective catalytic reduction catalyst selectively to reduce NOx in an exhaust gas by using ammonia as a reducing agent;
a second NOx catalyst (32) that is arranged in said exhaust passage (2) at a location downstream of said first NOx catalyst (31) and is an NOx selective catalytic reduction catalyst selectively to reduce NOx in the exhaust gas by using ammonia as a reducing agent;
a first addition device (41) that is arranged in said exhaust passage (2) at the upstream side of said first NOx catalyst (31) and configured to add an additive agent, which is ammonia or a precursor of ammonia, into the exhaust gas;
a second addition device (42) that is arranged in said exhaust passage (2) at the downstream side of said first NOx catalyst (31) and at the upstream side of said second NOx catalyst (32), and configured to add said additive agent into the exhaust gas; and
a control device (10) configured to carry out normal control in which an amount of the additive agent corresponding to an amount of NOx flowing into said first NOx catalyst (31) is added from said first addition device (41), wherein when an amount of ammonia adsorbed to said second NOx catalyst (32) exceeds a predetermined upper limit amount in the case where said first NOx catalyst (31) and said second NOx catalyst (32) have been activated, said control device (10) configured to carry out decrease control in which an amount of said additive agent to be added from said first addition device (41) is made smaller than the amount of said additive agent to be added at the time of said normal control.

**2.** The exhaust gas purification apparatus for an internal combustion engine (1) as set forth in claim 1, wherein said control device (10) is further configured to continue said decrease control until the amount of ammonia adsorbed to said second NOx catalyst (32) is decreased to a predetermined lower limit amount which is a value smaller than said predetermined upper limit amount.

**3.** The exhaust gas purification apparatus for an internal combustion engine (1) as set forth in claim 1 or 2, wherein in said decrease control, said control device (10) is further configured to set the amount of the additive agent to be added from said first addition device (41) to an amount in which a sum of the NOx reduction rates in said first NOx catalyst (31) and said second NOx catalyst (32) becomes equal to or larger than a reduction rate threshold value.

Fig. 1

Fig. 2

START

S101 — OBTAIN EACH AMOUNT
OF AMMONIA ADSORPTION

S102 — OBTAIN TEMPERATURE
OF EACH CATALYST

S103 —
TEMPERATURE
OF EACH CATALYST
≧ ACTIVATION
TEMPERATURE ?

No

S105 — ADD ADDITIVE AGENT
TO ONLY ACTIVATED
CATALYST

Yes

S104 —
AMOUNT OF
AMMONIA ADSORPTION
> FIRST THRESHOLD
VALUE ?

No

Yes

S107 — PERFORM NORMAL
CONTROL

S106 — SET DECREASE FLAG
TO ON

S108 — DECREASE AMOUNT OF
ADDITIVE AGENT

S109 —
AMOUNT OF
AMMONIA ADSORPTION
< SECOND THRESHOLD
VALUE ?

No

S110 — Yes

SET DECREASE FLAG
TO OFF

END

Fig. 3

Fig. 4

Fig. 5

S106 — SET DECREASE FLAG TO ON

S201 — CALCULATE NOx REDUCTION RATE

S202 — NOx REDUCTION RATE < REDUCTION RATE THRESHOLD VALUE ?

No

Yes

S203 — CALCULATE REQUESTED NOx REDUCTION RATE

S108 — DECREASE AMOUNT OF ADDITIVE AGENT

S204 — CALCULATE TARGET AMOUNT OF ADSORPTION

S205 — UPDATE AMOUNT OF ADDITION

S109 — AMOUNT OF AMMONIA ADSORPTION < SECOND THRESHOLD VALUE ?

No

S110 — SET DECREASE FLAG TO OFF

Yes

END

Fig. 6

CONCENTRATION
OF INFLOW NOx

TIME

AMOUNT OF
ADSORPTION OF
AMMONIA

L42

FIRST
THRESHOLD
VALUE

SECOND
THRESHOLD
VALUE

L41

TIME

NOx REDUCTION
RATE

REDUCTION
RATE
THRESHOLD
VALUE

TIME

AMOUNT OF
ADSORPTION

T11          T12  T13
TIME

Fig. 7

Europäisches
Patentamt

European
Patent Office

Office européen
des brevets

# EUROPEAN SEARCH REPORT

**Application Number**

EP 18 15 6646

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 9 567 888 B2 (CUMMINS INC [US]) 14 February 2017 (2017-02-14) * column 8, line 64 - column 11, line 40; figures 1,2,7 * * column 11, line 41 - column 12, line 27; figure 8 * | 1-3 | INV. F01N3/20 F01N13/00 |
| A | EP 1 132 585 A2 (FORD GLOBAL TECH INC [US]) 12 September 2001 (2001-09-12) * paragraphs [0018] - [0020]; figures 1-3 * * paragraphs [0025] - [0028]; figures 5-7 * | 1-3 | |
| A | EP 2 295 750 A1 (HONDA MOTOR CO LTD [JP]) 16 March 2011 (2011-03-16) * paragraphs [0054], [0056]; figure 1 * * paragraph [0073]; figure 2 * * paragraphs [0209] - [0215]; figure 22 * * paragraphs [0238] - [0242]; figure 27 * | 1-3 | |

TECHNICAL FIELDS
SEARCHED (IPC)

F01N

The present search report has been drawn up for all claims

| Place of search | Date of completion of the search | Examiner |
|---|---|---|
| Munich | 23 March 2018 | Kolland, Ulrich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 15 6646

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2018

| Patent document cited in search report | | Publication date | Patent family member(s) | | Publication date |
|---|---|---|---|---|---|
| US 9567888 | B2 | 14-02-2017 | US | 2015275730 A1 | 01-10-2015 |
| | | | US | 2017114690 A1 | 27-04-2017 |
| EP 1132585 | A2 | 12-09-2001 | EP | 1132585 A2 | 12-09-2001 |
| | | | US | 6269633 B1 | 07-08-2001 |
| EP 2295750 | A1 | 16-03-2011 | EP | 2295750 A1 | 16-03-2011 |
| | | | JP | 5221647 B2 | 26-06-2013 |
| | | | JP | WO2009128169 A1 | 04-08-2011 |
| | | | US | 2011041480 A1 | 24-02-2011 |
| | | | WO | 2009128169 A1 | 22-10-2009 |

EPO FORM P0459

For more details about this annex : see Official Journal of the European Patent Office, No. 12/82

**REFERENCES CITED IN THE DESCRIPTION**

**Patent documents cited in the description**

• JP 2011202620 A